# FASCICULE DE BREVET EUROPEEN

(11) **EP 0 457 634 B1**
(45) Date de publication et mention de la délivrance du brevet: **02.10.1996**
(21) Numéro de dépôt: 91401043.4
(22) Date de dépôt: 19.04.1991
(51) Int. Cl.: C04B 20/10, B01F 5/20, C04B 38/08

(54) **Granulats légers pour bétons allégés, leur procédé d'obtention.**
Leichtgranulate für Leichtbeton, Verfahren zu ihrer Herstellung.
Lightweight granules for lightweight concrete, process for their production.

(30) Priorité: 18.05.1990 FR 9006231
(43) Date de publication de la demande: 21.11.1991
(73) Titulaire: FIBRASA HOLDING AG, CH-6430 Schwyz (CH)
(72) Inventeur: Wicki, Maximilian, CH-4500 Soleure (CH)
(74) Mandataire: Hirsch, Marc-Roger

(56) Documents cités:
- EP-A- 0 185 583
- EP-A- 0 434 477
- DE-A- 2 164 051
- FR-A- 2 396 634
- FR-A- 2 415 085
- CHEMICAL ABSTRACTS, vol. 81, no. 16, 21 octobre 1974, Columbus, OH (US); A. KUCHERENKO et al., p. 275, no. 95707v
- CHEMICAL ABSTRACTS, vol. 99, no. 8, 1983, Columbus, OH (US); p. 250, no. 57925d
- FIP MANUAL OF LIGHTWEIGHT AGGREGATE, 2ème edit., Surrey Univ. Press, GB, 1983; pp. 21, 25, 33
- CONCRETE ADMIXTURES HANDBOOK, Noyes Publications, 1984, US; RAMACHANDRAN, pp. 211-212

## Description

La présente invention se rapporte à des granulats légers, artificiels ou non, à capacité d'allégement augmentée pour la confection de bétons allégés non porteurs. Elle se rapporte également à un procédé de préparation de ces granulats enrobés.

On connaît l'utilisation dans la fabrication de bétons allégés de granulats légers, tels que schistes et argiles expansés, ponces, pouzzolanes, perlites, vermiculites, polystyrènes expansés, copeaux de bois et liège.

De tels granulats, de densité inférieure à 1, sont de préférence précalibrés, par élimination de la fraction fine, par exemple inférieure à 1,4 mm de diamètre, pour éviter l'adsorption d'une trop grande quantité d'adjuvants, ce qui serait préjudiciable aux caractéristiques souhaitables du matériau.

Ces granulats sont principalement caractérisés par une grande porosité par rapport aux agrégats traditionnels lourds. Une porosité importante entraîne des propriétés indésirables pour la confection d'un béton léger compact et résistant mécaniquement. En effet, une forte porosité confère à l'agrégat léger une forte capacité d'absorption d'eau nécessitant l'utilisation de quantités importantes d'eau pour hydrater correctement le ciment et pour obtenir une bonne maniabilité du béton.

L'emploi de quantités importantes d'eau de gâchage entraîne à son tour d'autres inconvénients, tels qu'abaissement des caractéristiques mécaniques, augmentation du temps de prise et de séchage du béton, maniabilité médiocre du béton et risque de ségrégation du ciment.

La présente invention permet l'obtention de granulats légers présentant une capacité d'allégement des bétons non porteurs supérieure, et dont l'emploi par mètre cube de béton est réduit, ce qui permet donc une augmentation de la quantité de ciment utilisée, sans que ne varie la densité du béton durci, et une amélioration de la maniabilité du béton frais pour un rapport inférieur: eau de gâchage/ciment;

Un tel résultat est obtenu grâce à l'action synergique de plusieurs adjuvants adsorbés sur la surface des granulats.

Les granulats selon l'invention sont caractérisés dans la revendication 1.

Selon une forme d'exécution de l'invention, l'agent tensio-actif est, de préférence, un tensio-actif anionique synthétique. Il peut, entre autres, et non limitativement, consister en au moins l'un des agents de la liste suivante:
- abiétate de sodium,
- sels d'éthanolamine, de triéthanolamine,
- sulfonates d'alcool gras,
- les alkylarylsulfonates,
- les savons sodiques d'acides polyhydroxycarboxyliques,
- les savons alcalins d'acides gras naturels à chaîne carbonée de C₁₂ à C₁₈,
- les dérivés tensio-actifs de nature protéique à base de sang animal.
Cet agent tensio-actif provoque un dégagement d'air au moment du malaxage du béton et contribue d'une part à l'allégement du béton, à l'amélioration de sa compacité du fait que les fines bulles d'air occluses jouent le rôle d'un sable fin comblant les vides interstitiels et, d'autre part, améliore considérablement la maniabilité de ce béton jusqu'à le rendre pompable. Cette quantité d'air est contrôlée à la fois par la quantité d'eau de gâchage et par un temps de malaxage déterminé, notamment en fonction de la vitesse du malaxeur.

Selon une autre forme d'exécution de l'invention, l'accélérateur de prise des ciments est, de préférence, du nitrate et/ou du chlorure de sodium. Il peut également consister en au moins l'un des composés de la liste suivante:
- le chlorure de sodium,
- la soude, la potasse,
- les sels de bases alcalines: carbonates, silicates, fluosilicates, aluminates, borates,
- nitrite de calcium,
- acide oxalique.
Tout autre accélérateur connu susceptible de renforcer les caractéristiques mécaniques au jeune âge peut être employé.

Selon encore une autre forme d'exécution de l'invention, l'agent fluidifiant des ciments est, de préférence, le sulfonate de polynaphtalène à 40% d'extrait sec ou tout autre agent connu pour cette application présentant de préférence un poids moléculaire élevé, tels que, entre autres:
- lignosulfonate de sodium et lignosulfonate de calcium,
- résine mélamine formol,
- abiétate de sodium et abiétate de potassium,
- savons de résine.
La fonction essentielle de cet agent est d'améliorer la plasticité et les caractéristiques mécaniques du béton tout en réduisant la quantité d'eau de gâchage.

L'invention décrit également un procédé de préparation de granulats dont la surface est enrobée par l'adsorption du mélange spécifique d'adjuvants précités, selon lequel on traite dans un malaxeur les granulats en présence de ce mélange d'adjuvants et d'eau.

Selon un mode de réalisation du procédé de l'invention, on emploie pour le traitement de 1 000 volumes de granulat, un mélange des trois adjuvants agent tensio-actif/agent fluidifiant/accélérateur de prise de 1 000/1 000/4 000.

### EXEMPLE 1

### Préparation d'un granulat selon l'invention

On utilise de la vermiculite présentant les caractéristiques suivantes:

| | |
|---|---|
| . masse volumique apparente | environ 60 kg/mⁿ |
| . granulométrie | 6 à 1,4 mm |

On mélange au préalable les trois adjuvants dans une quantité définie d'eau. La vermiculite exfoliée est introduite dans le malaxeur par le cône de chute 1 qui la disperse régulièrement sur le plateau rotatif 3. Ce plateau est perforé de façon à augmenter le mouvement tourbillonnaire des grains déjà amorcé. Le flux est ensuite canalisé par l'entonnoir fixe 4 avant d'arriver dans la chambre de pulvérisation 5.

Le mélange liquide d'adjuvants et d'eau est véhiculé sous pression dans la canalisation 6 et pulvérisé par la buse 8 au coeur de la pluie de grains tourbillonnante de vermiculite. Le mouvement tourbillonnaire imprimé aux particules favorise tout particulièrement un bon contact au sein du liquide pulvérisé avec ce dernier.

La vermiculite traitée en surface est ensuite recueillie dans la chambre 12, puis dirigée vers l'ouverture de sortie 15 à l'aide d'une raclette 16.

Les trois adjuvants ont été pulvérisés sur 1 000 litres de vermiculite dans les proportions suivantes:

| | |
|---|---|
| . agent tensio-actif anionique à 30% d'extrait sec | 1 000 g |
| . agent fluidifiant (naphtalènesulfonate) à 40% d'extrait sec | 1 000 g |
| . accélérateur de prise (nitrate de sodium/chlorure de sodium, 50/50% en poids) | 4 000 g |
| . eau | 34 000 g |

### EXEMPLES 2 A 4

La vermiculite ainsi enrobée est utilisée pour préparer des bétons présentant les performances suivantes.

L'exemple 2 correspond à un exemple témoin effectué sur une vermiculite n'ayant pas été traitée conformément à l'invention.

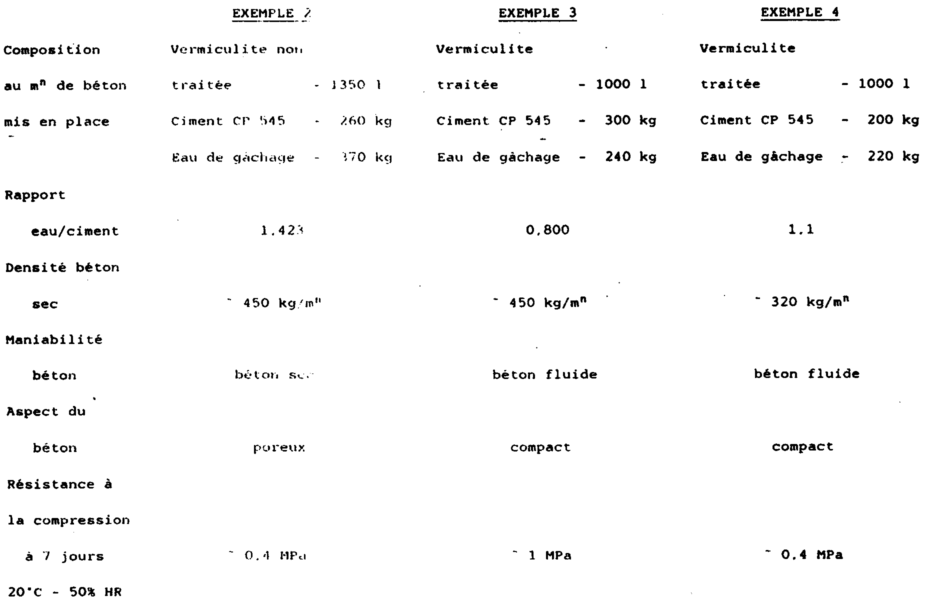

Comme il résulte de ce tableau, l'invention offre l'avantage de pouvoir mettre en oeuvre à partir de granulats ainsi traitée, des bétons légers supérieurs à ceux élaborés avec une vermiculite non traitée.

A densité équivalente, la quantité d'eau de gâchage est inférieure et les caractéristiques rhéologiques du béton frais ainsi que les performances mécaniques du béton durci sont nettement supérieures.

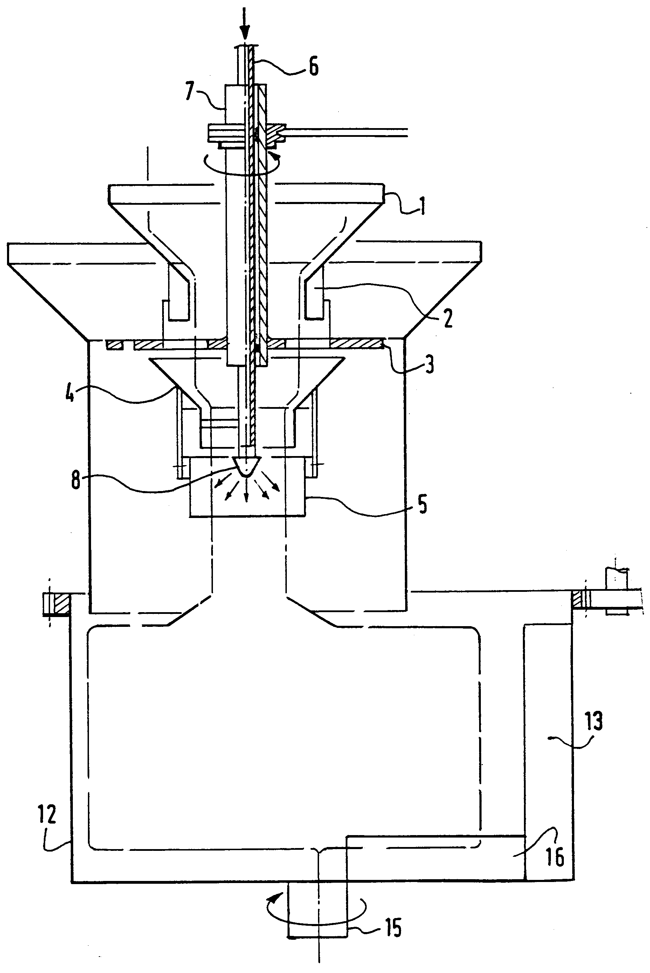

## Revendications

1. Granulat léger à capacité d'allégement augmentée pour la confection de bétons allégés non-porteurs, avec forte capacité d'absorption d'eau, caractérisé en ce que sa surface est enrobée d'un mélange contenant un agent tensio-actif, un accélérateur de prise des ciments et un agent fluidifiant des ciments, en ce qu'il présente une densité inférieure à 1, et en ce qu'il est précalibré par élimination de la fraction fine inférieure à 1,4 mm.

2. Granulat selon la revendication 1, caractérisé en ce qu'il est formé d'un matériau choisi dans le groupe comprenant des schistes et argiles expansés, ponces, pouzzolanes, perlites et vermiculites, copeaux de bois et liège.

3. Granulat selon la revendication 1 ou 2, caractérisé en ce qu'il consiste en vermiculite.

4. Granulat selon l'une quelconque des revendications 1 à 3, caractérisé en ce que l'agent tensio-actif est un tensio-actif anionique synthétique.

5. Granulat selon l'une quelconque des revendications 1 à 4, caractérisé en ce que l'agent accélérateur de prise des ciments est le nitrate et/ou chlorure de sodium.

6. Granulat selon l'une quelconque des revendications 1 à 5, caractérisé en ce que l'agent fluidifiant des ciments est un sulfonate de polynaphtalène à 40% d'extrait sec et de haut poids moléculaire.

7. Granulat selon l'une quelconque des revendications 1 à 6, caractérisé en ce que rapport volume de granulat et masse tensio-actif/agent fluidifiant/accélérateur de prise est d'environ 1000 l/1000 g/1000 g/4000 g.

## Claims

1. Lightweight aggregate material with an increased density-reduction capacity for use in producing non-load-bearing lightweight concretes with a considerable water-absorption capacity, characterized in that the surface of said aggregates is coated with a mixture containing a surfactant, a cement set accelerator and a cement fluidifying agent, in that it has a density less than 1 and in that it is pre-calibrated by elimination of the fine fraction having a size less than 1.4 mm.

2. Aggregate according to claim 1, characterized in that it consists of a material selected from the group comprising expanded schists and clays, pumices, pozzolana, perlites and vermiculites, expanded polystyrenes, wood chips and cork.

3. Aggregate according to claim 1 or 2, characterized in that it consists of vermiculite.

4. Aggregate according to any one of claims 1 to 3, characterized in that the surfactant is a synthetic anionic surfactant.

5. Aggregate according to any one of claims 1 to 4, characterized in that the cement set accelerator is sodium nitrate and/or chloride.

6. Aggregate according to any one of claims 1 to 5, characterized in that the cement fluidifying agent is a polynaphtalene sulfonate with 40% dry extract content and high molecular weight.

7. Aggregate according to any one of claims 1 to 6, characterized in that the volume ratio between the aggregate and the surfactant/fluidifying agent/set accelerator mass is about 1000 l/1000 g/1000 g/4000 g.

## Patentansprüche

1. Leichtgranulat mit erhöhter Gewichtsminderungskapazität zur Herstellung von Leichtbeton mit hoher Wasserabsorptionsfähigkeit, dadurch gekennzeichnet, daß seine Oberfläche mit einer Mischung überzogen ist, die ein oberflächenaktives Mittel, einen Abbindebeschleuniger für Zement und ein Verflüssigungsmittel für Zemente enthält, daß es eine Dichte unter 1 aufweist und durch Entfernung der feinen Fraktion unter 1,4 mm vorsortiert ist.

2. Granulat nach Anspruch 1, dadurch gekennzeichnet, daß es aus einem Material ausgewählt aus der Gruppe bestehend aus expandiertem Schiefer und Ton, Bimssteinen, Puzzolanerden, Perliten und Vermiculiten, Holzspänen und Kork gebildet ist.

3. Granulat nach Anspruch 1 oder 2, dadurch gekennzeichnet, daß es aus Vermiculit besteht.

4. Granulat nach einem der Ansprüche 1 bis 3, dadurch gekennzeichnet, daß das oberflächenaktive Mittel ein synthetisches anionisches oberflächenaktives Mittel ist.

5. Granulat nach einem der Ansprüche 1 bis 4, dadurch gekennzeichnet, daß der Abbindebeschleuniger für Zement Natriumnitrat und/oder Natriumchlorid ist.

6. Granulat nach einem der Ansprüche 1 bis 5, dadurch gekennzeichnet, daß das Verflüssigungsmittel für Zemente ein Sulfonat von Polynaphthalin mit 40 % Trockensubstanz und hohem Molekulargewicht ist.

7. Granulat nach einem der Ansprüche 1 bis 6, dadurch gekennzeichnet, daß das Verhältnis von Granulatvolumen zu Masse aus oberflächenaktivem Mittel/Verflüssigungsmittel/Abbindebeschleuniger ungefähr 1000 l/1000 g/1000 g/4000 g ist.
